# EUROPEAN PATENT APPLICATION

(11) **EP 4 737 704 A1**
(43) Date of publication of application: **06.05.2026**
(21) Application number: 24210603.7
(22) Date of filing: 04.11.2024
(51) Int. Cl.: F02M 31/16

(54) **INTERNAL COMBUSTION ENGINE**

(71) Applicant: Innio Jenbacher GmbH & Co OG, 6200 Jenbach (AT)
(72) Inventor: FIMML, Wolfgang, 6212 Maurach in Tirol (AT); URL, Michael, 85375 Neufahrn (DE); SPYRA, Nikolaus, 6020 Innsbruck (AT); LAIMINGER, Stephan, 6322 Kirchbichl (AT); HILLEN, Friedhelm, 6200 Jenbach (AT); LEROUX, Clement, 6263 Fügen (AT)
(74) Representative: Torggler & Hofmann Patentanwälte - Innsbruck

(57) **Abstract**

Internal combustion engine (1) with at least one combustion chamber, an intake system (4) and optionally at least one prechamber for the at least one combustion chamber, wherein the intake system (4) comprises:
- a liquid fuel supply (9) configured to provide a liquid fuel,
- at least one air-fuel-mixing-zone (10) configured to mix air with liquid fuel from the liquid fuel supply (9) and to provide an air-fuel-mixture,
- a combustion chamber intake manifold (7) leading into the at least one combustion chamber,
- optionally a prechamber intake manifold (8) leading into the at least one prechamber and
wherein there is provided at least one preheater (12) configured to preheat the liquid fuel prior to its evaporation.

## Description

The present application claims priority under Article 88 (2) EPC and Article 88 (3) EPC to the two international applications PCT/AT/2024/060105 and PCT/AT/2024/0601056, both filed on 22 March 2024 at the Austian Patent Office, both entitled INTERNAL COMBUSTION ENGINE, the entire disclosures of which are hereby incorporated by reference.

The present invention relates to an internal combustion engine with at least one combustion chamber, an intake system and optionally at least one prechamber for the at least one combustion chamber, wherein the intake system comprises:
- a liquid fuel supply configured to provide a liquid fuel,
- at least one air-fuel-mixing-zone configured to mix air with liquid fuel from the liquid fuel supply and to provide an air-fuel-mixture,
- a combustion chamber intake manifold leading into the at least one combustion chamber,
- optionally a prechamber intake manifold leading into the at least one prechamber.

Internal combustion engines are driven by the combustion of an air-fuel-mixture. An important parameter for the combustion is the air-fuel-ratio which is the mass ratio of air to a solid, liquid or gaseous fuel present in the combustion process. An air-fuel-ratio of 1 describes an air-fuel-mixture with the necessary amount of air to burn all the fuel completely and in a stoichiometric manner. An air-fuel-ratio > 1 describes a lean mixture with an excess of air compared to the necessary stoichiometric amount of air needed for the complete combustion of the fuel within the air-fuel-mixture. The opposite is a rich mixture. The air-fuel-ratio may also be called lambda λ.

For some applications like big bore engines a lean mixture is desired during operation which causes challenges because the engine does not always run stable and the combustion is not always sufficiently reliable. Hence, prechambers are known as ignition amplifiers for a combustion chamber of an internal combustion engine. For example, the prechamber of a gas engine can be scavenged with a gas fuel to provide a more reliable ignition amplification for the combustion chamber and improve the combustion behaviour of the engine.

Despite that, due to economic and ecological reasons there is the desire to use other fuels than conventional fuels like gasoline or diesel. For example, hydrogen is a promising fuel to meet the requirements of a sustainable energy carrier. Unfortunately, hydrogen is difficult to liquefy, to handle, to transport and to store. Other alternative fuels, e.g. methanol, which are liquid at standard conditions can be handled, transported and stored in an easier manner. However, such fuels like methanol are significantly different in their chemical properties and/or their combustion behaviour in contrast to conventional liquid fuels like the fossil fuels gasoline or diesel. For example, methanol shows a significant higher evaporation enthalpy [kJ/kg] in contrast to fossil fuels. As a result, new challenges arise for internal combustion engines working on the basis of such alternative liquid fuels.

These new challenges are connected to evaporation problems and condensation problems of the liquid fuel. The evaporation of the liquid fuel may be difficult due to its evaporation enthalpy. Additionally, a subsequent and undesirable condensation of the fuel after evaporation may cause problems of the internal combustion engine. Such condensation of the fuel may occur before mixing with air. During or after the mixing with air an analogue condensation of an air-fuel-mixture, i.e. condensation of at least a part of the fuel of the air-fuel-mixture, may occur, in particular in the combustion chamber intake manifold or in the prechamber intake manifold.

Problems due to condensation of fuel and/or air-fuel-mixtures occur in particular at idle, at low loads or at cold start conditions of the internal combustion engine.

The object of the invention is therefore to improve the combustion of an internal combustion engine in view of aforementioned problems, in particular to provide a more robust and reliable internal combustion engine running on a liquid fuel.

Regarding the internal combustion engine, this object is achieved by three aspects according to claims 1, 4 and 6.

Regarding the internal combustion engine, this object is achieved according to a first aspect in such a way that there is provided at least one preheater configured to preheat the liquid fuel prior to its evaporation.

Due to the first aspect, the liquid fuel from the liquid fuel supply is preheated. So, the thermal energy and the temperature, respectively, of the liquid fuel is higher than without a preheater and less energy is necessary to evaporate the preheated liquid fuel. As a result, the internal combustion engine deals with less evaporation problems, condensation problems and runs more robust and reliable.

An additional advantage of the first aspect can be that the liquid fuel is ideally preheated to an elevated temperature level, which enables complete and/or sudden evaporation in the intake system, preferably after injection of the preheated liquid fuel into the air-fuel-mixing-zone.

A preheater can be an active device configured to increase the thermal energy of a liquid fuel. With other word the preheater can increase the temperature of the liquid fuel.

An active device can be a self-reliant or proactive device. An active device can be at least partially, preferably completely, independent from its environment and can affect its environment on its part.

An active device can be monitored and/or controlled by a control unit.

For example, a heat exchanging device which utilizes the hot exhaust gas to preheat the liquid fuel and which can be monitored and/or controlled can be an active device.

In contrast, a passive device can be at least partially, preferably completely, dependent from its environment and can affect its environment solely as a reaction to environmental changes. E.g. if a temperature and/or a pressure of the environment of a valve is too high, the valve opens to reduce temperature and/or pressure as a reaction to the environmental changes.

In a preferred embodiment, the at least one preheater can be a, preferably active, heating device configured to increase the temperature of a liquid fuel to a temperature below the evaporation temperature or with other words below the boiling point of the liquid fuel.

In a particularly preferred embodiment, the at least one preheater can be a, preferably active, heating device configured to increase the, preferably thermal, energy of a liquid fuel wherein the energy increase keeps the liquid fuel in a at least partial, preferably complete, liquid state and does not induce a partial or complete evaporation of the liquid fuel.

In a preferred embodiment, the at least one preheater can be an electric heating device or with other word a heating device by electricity.

In a preferred embodiment, the at least one preheater is located upstream
- of a combustion chamber and/or
- of a prechamber and/or of a nozzle of the combustion chamber, the prechamber or an injector and/or
- of an air-fuel-mixing-zone and/or
- of an air-fuel-mixer.

Evaporation of liquids, e.g. liquid fuel, takes place due to changed temperature and/or pressure conditions. At constant pressure the temperature increases until the evaporation temperature is reached, and evaporation begins. At constant temperature the pressure decreases until the vapor pressure is reached, evaporation begins. To start evaporation the increase of temperature and the decrease of pressure may be combined.

A at least partial, preferably complete and/or sudden, evaporation of the liquid fuel and/or the liquid fuel within the air-fuel-mixture may take place within the air-fuel-mixing-zone, preferably within the air-fuel-mixer.

In a preferred embodiment, the at least one air-fuel-mixing-zone, preferably the at least one air-fuel-mixer, is configured to at least partially, preferably completely and/or suddenly, evaporate the liquid fuel and/or the liquid fuel within the air-fuel-mixture, preferably by an increase of temperature and/or a decrease of pressure and/or a, preferably thermal, energy input.

Regarding the internal combustion engine, this object is achieved according to a second aspect in such a way that the at least one air-fuel-mixing-zone comprises or is thermally coupled to at least one heating device for heating the air-fuel-mixture.

Due to the second aspect, the air-fuel-mixture is heated. So, the thermal energy and the temperature, respectively, of the fuel in the air-fuel-mixture and the air-fuel-mixture as a whole is higher than without such a heating device and the risk of undesirable condensation is reduced. As a result, the internal combustion engine deals with less condensation problems and runs more robust and reliable.

The term "thermally coupled" can be understood as being connected and/or configured to transfer thermal energy. The transfer of thermal energy, with other words heat, occurs between at least two components by thermal conduction, thermal convection and/or thermal radiation.

The at least two components may be for example two separate devices wherein the hotter first device is mounted on the colder second device without any other components in between. So, the thermal coupling is in this example realised by a possible thermal conduction, since the two devices are in touch/contact with each other. In another example, the devices may be connected by a third component like a thermal connection line. Another example may be that the two separate devices are not mechanically connected but due to thermal convection and/or thermal radiation the thermal energy transfer takes place between the two separate devices.

Another example may be that there is only one separate device but within said device are at least two components which are thermally coupled with each other within the said device. Analogue as described above, the thermal coupling in this example can be based on thermal conduction, thermal convection and/or thermal radiation.

In a preferred embodiment, it can be provided that the at least one air-fuel-mixing-zone, preferably an air-fuel-mixer, comprises a heating device for heating the air-fuel-mixture.

An additional advantage of the second aspect can be that the air-fuel-mixing-zone fulfils more than one functionality. On the one hand, the air-fuel-mixing-zone mixes air with the liquid and/or evaporated fuel. On the other hand, the air-fuel-mixing-zone heats the fuel in the air-fuel-mixture and the air-fuel-mixture as a whole. As a result, the internal combustion engine can be constructed more efficiently and eventually at lower costs.

Regarding the internal combustion engine, this object is achieved according to a third aspect in such a way that there is provided at least one intercooler configured to cool and to heat air and/or the air-fuel-mixture.

Intercooler is a well-known device which is used to cool charged air. E.g. the intercooler cools down charged air provided by a compressor. The compressor of this example may be connected, preferably via a turbine drive shaft, to a turbine of the exhaust system of the internal combustion engine (turbo charger). Additionally, or alternatively, there is a motor, preferably an electric motor, provided acting on the drive shaft.

In contrast to the well-known intercoolers in prior art, the intercooler described herein is configured to cool and to heat air and/or the air-fuel-mixture.

Due to the third aspect, air and/or the air-fuel-mixture, preferably downstream of the air-fuel-mixing-zone, is heated. So, the temperature of air and/or the fuel in the air-fuel-mixture and the air-fuel-mixture as a whole is higher than without an intercooler and the risk of incomplete evaporation of the liquid fuel and/or undesirable condensation is reduced. As a result, the internal combustion engine deals with less condensation problems and runs more robust and reliable.

In a preferred embodiment, it can be provided that the at least one intercooler is located upstream to an injector, preferably a port fuel injector, and/or downstream to the at least one air-fuel-mixing-zone and/or a dosing device.

An additional advantage of the third aspect can be that the intercooler fulfils more than one functionality. On the one hand, the intercooler conventionally cools down the air-fuel-mixture if required. On the other hand, the intercooler heats the fuel in the air-fuel-mixture and the air-fuel-mixture as a whole if required. As a result, the internal combustion engine can be constructed more efficiently and eventually at lower costs. For this purpose, the intercooler may comprise a modified coolant circuit which is beneficial at low loads, in particular. The intercooler may be an additional heating element for an improved system behavior.

All three aspects can contribute to a more robust and reliable internal combustion engine. This is even more crucial at idle, at low loads and at cold start conditions. In these cases, the temperature of the liquid fuel and/or of the individual components of the internal combustion engine and/or of the internal combustion engine as whole is at least partially or completely too low for the evaporation of the liquid fuel and/or for stabilizing the air-fuel-mixture at least partially, preferably completely, in the gas state.

These aspects can be especially important for liquid fuels with higher evaporation enthalpies than conventional liquid fuels like gasoline or diesel. In particular, liquid fuels like alcohols are difficult to use for an air-fuel-mixture due to their higher evaporation enthalpies and the higher energies they need for partial or complete evaporation. If a critical amount of the liquid fuel stays liquid within the air-fuel-mixture until the air-fuel-mixture arrives at the at least one combustion chamber and optionally the at least one prechamber combustion shortcomings occur. These combustion shortcomings result in insufficient combustion, disadvantageous performance of the internal combustion engine, damages and/or fouling of the internal combustion engine. This issue of said liquid fuels may also occur when the air-fuel-mixture is sufficiently evaporated within the air-fuel-mixing-zone but due to insufficient temperatures the originally liquid fuel within the air-fuel-mixture cools down and condensates again within the intake system, the at least one combustion chamber and/or the optional at least one prechamber of the internal combustion engine.

For example, when an internal combustion engine is started at cold start conditions with cold components, e.g. air-fuel-mixer, combustion chamber intake manifold, prechamber intake manifold, combustion chamber intake pipe, prechamber intake pipe etc., it is difficult to evaporate the cold liquid fuel as well as stabilize the air-fuel-mixture at least partially, preferably completely, in the gas state till its arrival in the combustion chamber and/or the prechamber. An issue in this context may occur even when the fuel completely evaporates and mixes with air. However, due to the cold manifolds and pipes of the internal combustion engine downstream of the air-fuel-mixing-zone the air-fuel-mixture in the gas state may cool down and the fuel at least partially may condensate on the walls of the manifolds and pipes. As a result, the air-fuel-ratio may be adversely affected and the internal combustion engine may work less robust and reliable. Moreover, the condensated fuel may lead to other engine problems as well, e.g. harming effects on the materials of the intake system.

All three aspects can avoid or at least reduce the risks of the aforementioned negative effects. It is noted that the at least one preheater can reduce evaporation problems as well as condensations problems, since an enhanced heating of the liquid fuel can lead to a more reliable evaporation procedure as well as to higher temperatures of the evaporated fuel and the air-fuel-mixture which results in a reduced risk of subsequent and undesirable condensation.

So, the three aspects are especially beneficial at idle, at low loads and at cold start conditions. After reaching a mode of operation with sufficient conditions, i.e. temperatures, pressures etc., the at least one preheater and/or the at least one heating device and/or the at least one intercooler may be partly or completely deactivated.

The air which is mixed with the liquid fuel by the air-fuel-mixing-zone may be in a preferred embodiment naturally occuring air. In another preferred embodiment the air may comprise at least one non-naturally-occuring-ingredient like a gas fuel from a gas fuel supply. Naturally occuring air itself is a mixture of nitrogen, oxygen and other substances with small concentrations. The at least one non-naturally-occuring-ingredient is either a substance which is usually not present in naturally occuring air or a substance with a certain concentration that is usually not present in air.

For example, methane or hydrogen are ingredients of naturally occurring air with small concentrations and may be added to the naturally occuring air in such a way that the concentration of methane or hydrogen is significantly higher than in naturally occuring air.

As a side note, the at least one prechamber and the prechamber intake manifold are not essential for the different aspects. Thus, they are optionally provided within the internal combustion engine. Nevertheless, it may be advantageous to provide an internal combustion engine with the at least one prechamber and the prechamber intake manifold, e.g. due to the reasons as described above.

For the sake of completeness, it is pointed out that in the course of the present description, the numerical words used, such as 'one', 'two', 'three' and the like, and the indefinite articles 'a' and 'an' basically only describe the minimum quantity of a feature of the internal combustion engine. Individual features or components can of course also be present in larger numbers. For example, the internal combustion engine may have more than one combustion chamber, combustion chamber intake manifold, preheater etc. In this sense, for example, the numerical word 'one' or the indefinite article 'a' are to be understood as meaningful in the sense of 'at least one'.

Further advantageous embodiments of the arrangement are defined in the dependent claims.

Further details and advantages of preferred embodiment examples are explained in more detail below with the aid of the description of the figures with reference to the drawings. There are shown in:
Fig. 1 is a first example of an embodiment of a proposed internal combustion engine.
Fig. 2 is a second example of an embodiment of a proposed internal combustion engine.
Fig. 3 is a third example of an embodiment of a proposed internal combustion engine.

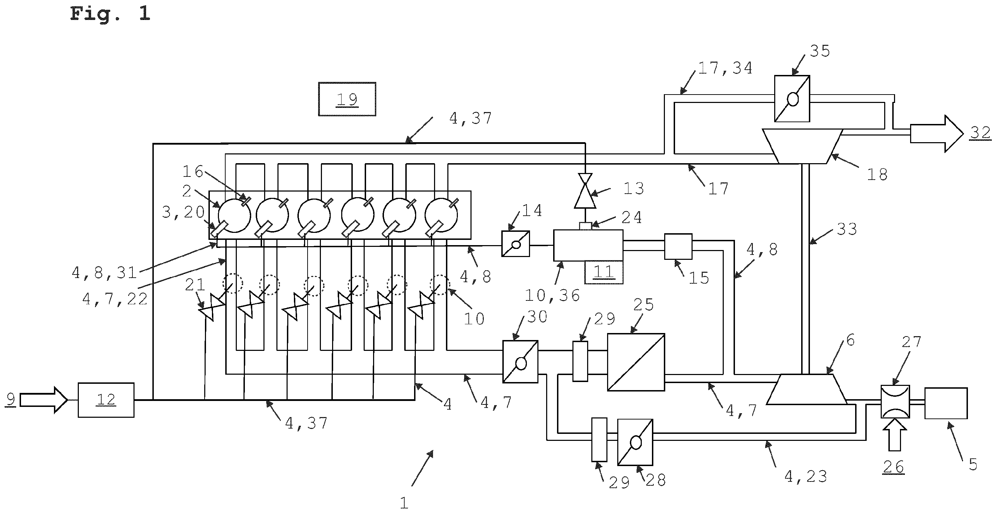

Fig. 1 shows a first example of an embodiment of a proposed internal combustion engine 1.

Fig. 1 shows an internal combustion engine 1 with at least one combustion chamber, an intake system 4 and optionally at least one prechamber for the at least one combustion chamber, wherein the intake system 4 comprises:
- a liquid fuel supply 9 configured to provide a liquid fuel,
- at least one air-fuel-mixing-zone 10 configured to mix air with liquid fuel from the liquid fuel supply 9 and to provide an air-fuel-mixture,
- a combustion chamber intake manifold 7 leading into the at least one combustion chamber,
- optionally a prechamber intake manifold 8 leading into the at least one prechamber and
wherein there is provided at least one preheater 12 configured to preheat the liquid fuel prior to its evaporation.

Fig. 1 shows an internal combustion engine 1 with at least one combustion chamber, an intake system 4 and optionally at least one prechamber for the at least one combustion chamber, wherein the intake system 4 comprises:
- a liquid fuel supply 9 configured to provide a liquid fuel,
- at least one air-fuel-mixing-zone 10 configured to mix air with liquid fuel from the liquid fuel supply 9 and to provide an air-fuel-mixture,
- a combustion chamber intake manifold 7 leading into the at least one combustion chamber,
- optionally a prechamber intake manifold 8 leading into the at least one prechamber and
wherein the at least one air-fuel-mixing-zone 10 comprises or is thermally coupled to at least one heating device 11 for heating the air-fuel-mixture.

Fig. 1 shows an internal combustion engine 1 with at least one combustion chamber, an intake system 4 and optionally at least one prechamber for the at least one combustion chamber, wherein the intake system 4 comprises:
- a liquid fuel supply 9 configured to provide a liquid fuel,
- at least one air-fuel-mixing-zone 10 configured to mix air with liquid fuel from the liquid fuel supply 9 and to provide an air-fuel-mixture,
- a combustion chamber intake manifold 7 leading into the at least one combustion chamber,
- optionally a prechamber intake manifold 8 leading into the at least one prechamber and
wherein there is provided at least one intercooler configured to cool and to heat air and/or the air-fuel-mixture.

Fig. 1 shows an internal combustion engine with six combustion chambers 2, six prechambers 3 for each of the six combustion chambers 2, an intake system 4 and an exhaust system 17.

The intake system 4 of Fig. 1 basically comprises two parts, namely a first intake system part for feeding air and optionally a gas fuel to the combustion chambers 2 and a second intake system part for feeding a liquid fuel to the prechambers 3 and/or the combustion chambers 2.

The first intake system part of Fig. 1 comprises following components, beginning from the right-hand side of Fig. 1 and ending in the combustion chambers 2:
- Air supply 5, providing air for air-fuel-mixtures,
- Gas fuel supply 26, providing a gas fuel for air-fuel-mixtures,
- Gas mixer 27, mixing the gas fuel from the gas fuel supply 26 with the air of the air supply 5,
- A compressor 6, compressing air from the air supply 5 and/or the air-fuel-mixture from the gas mixer 27 and feeding the air and/or the air-fuel-mixture downstream into the at least one combustion chamber 2 by a combustion chamber intake manifold 7 and into the at least one prechamber 3 by a prechamber intake manifold 8,
- An intercooler 25, to ensure the cooling of the compressed air and/or the air-fuel-mixture below a determined temperature,
- A flame arrestor 29, protecting the first intake system part against backfiring of the combustion engine,
- A throttle 30, influencing a fluid flow of the air and/or the air-fuel-mixture,
- A combustion chamber intake manifold 7, connecting at least the compressor 6, the intercooler 25, the flame arrestor 29, the throttle 30 and the six combustion chambers 2, wherein the combustion chamber intake manifold 7 divides into six combustion chamber intake pipe 22 before leading into the individual combustion chambers 2.

As depicted in Fig. 1 the first intake system part further comprises an intake bypass 23 with a compressor bypass valve 28 and an additional flame arrestor 29. The intake bypass 23 connects the air supply 5 with the combustion chamber intake manifold 7 and bypasses at least the compressor 6 and a connection to the second intake system part, namely the origin of a prechamber intake manifold 8.

In a preferred embodiment the intake system 4 comprises an intake bypass 23 configured to direct air into the at least one combustion chamber 2 and to bypass the compressor 6 and/or the air-fuel-mixing-zone 10.

The second intake system part of Fig. 1 comprises following components, beginning from the left-hand side of Fig. 1 and ending in either the combustion chamber intake pipes 22 or the prechambers 3:
- A liquid fuel supply 9, providing a liquid fuel in its liquid state to either the combustion chamber intake pipes 22 or the prechambers 3,
- A preheater 12 for preheating the liquid fuel from the liquid fuel supply 9,
- A junction leading to the combustion chamber intake manifold 7 and to the prechamber intake manifold 8,
- Six port fuel injectors 21, each connected with one of the six combustion chamber intake pipes 22 and configured to inject the liquid fuel from the liquid fuel supply 9 into the corresponding combustion chamber intake pipe 22, to be more precise into one of the six air-fuel-mixing-zones 10 in the combustion chamber intake manifold 7, to provide an air-fuel-mixture wherein this air-fuel-mixture comprises at least the originally liquid fuel from the liquid fuel supply 9 and air from the air supply 5. This air-fuel-mixture may alternatively comprise the originally liquid fuel from the liquid fuel supply 9 and another air-fuel-mixture from the gas mixer 27,
- A dosing device 13, for, preferably continuous or pulsed, dosing of the liquid fuel into the air-fuel-mixing-zone 10,
- An liquid fuel injector 24 for injecting the liquid fuel into the air-fuel-mixing-zone 10 in the prechamber intake manifold 8,
- An air-fuel-mixing-zone 10, mixing air with liquid fuel from the liquid fuel supply 9 and providing an air-fuel-mixture,
- A controlling device 14, for controlling the amount of the air-fuel-mixture fed to the prechambers 3,
- A common supply line 37 line with the dosing device 13 and the port fuel injectors 21 wherein the line connects the liquid fuel supply 9 with the combustion chamber intake manifold 7 and the prechamber intake manifold 8,
- The prechamber intake manifold 8, starting from the first intake system part, to be more precise starting from the combustion chamber intake manifold 7 between the compressor 6 and the intercooler 25, and ending in the prechambers 20. The prechamber intake manifold 8 connects at least the combustion chamber intake manifold 7, the measuring device 15, the air-fuel-mixing-zone 10, the controlling device 14 and the six prechambers 3, wherein the prechamber intake manifold 8 divides into six prechamber intake pipes 31 before leading into the individual prechambers 3.

A combustion chamber intake manifold 7 is a line of the intake system 4 which leads to at least one combustion chamber 2.

In Fig. 1 the combustion chamber intake manifold 7 starts at the compressor 6, divides into six combustion chamber intake pipes 22 and ends at the six individual combustion chambers 2.

A prechamber intake manifold 8 is a line of the intake system 4 which leads to at least one prechamber 3.

In Fig. 1 the prechamber intake manifold 8 starts at the combustion chamber intake manifold 7 between the compressor 6 and the intercooler 25, divides into six prechamber intake pipes 31 and ends at the six individual prechambers 3.

A common supply line 37 is a line of the intake system 4 which starts from a fuel supply, e.g. a liquid fuel supply 9 and/or a gas fuel supply 26, leading to a combustion chamber intake manifold and/or a prechamber intake manifold.

In the embodiment example of Fig. 1 are two common supply lines 37 depicted, one line starting from the liquid fuel supply 9 and one line starting from the gas fuel supply 26. The latter common supply line 37 is optional due to the optional gas fuel supply 26. Despite that, the common supply line 37 starting from the gas fuel supply 26 is at the same time an air supply line which starts from the air supply 5.

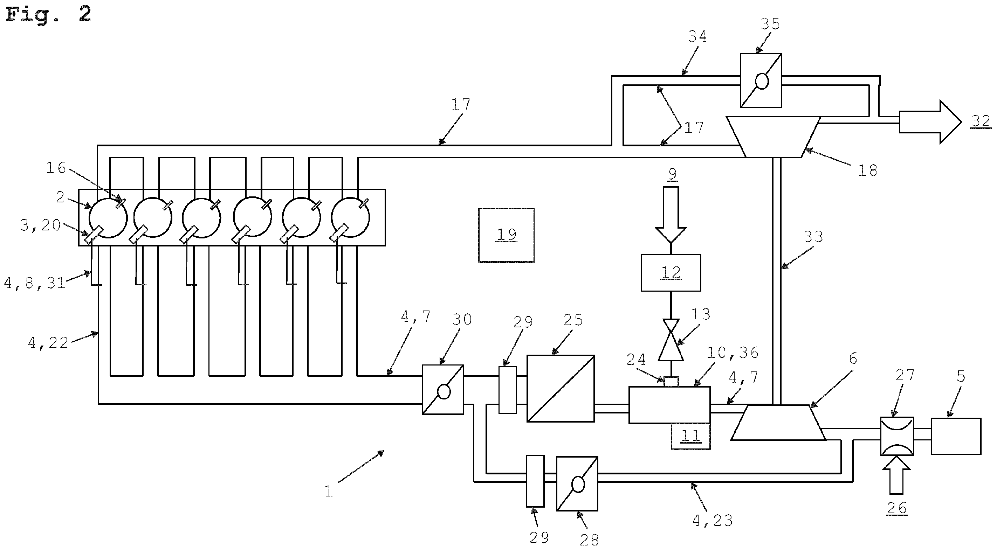

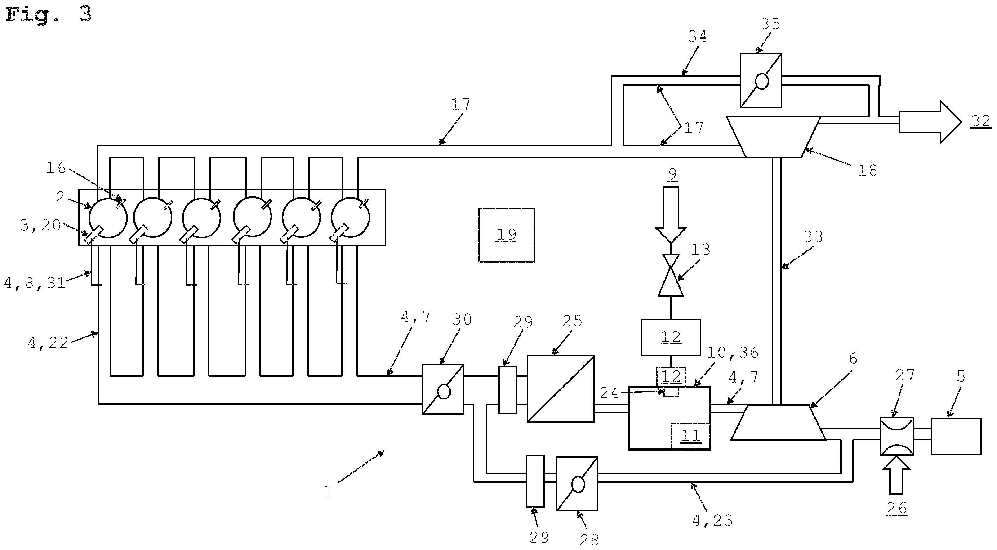

In the embodiment example of Fig. 2 and 3 are two common supply lines 37 depicted, one line starting from the gas fuel supply 26 analogue to the corresponding line in Fig. 1 and one line starting from the liquid fuel supply 9 which is differently arranged as in Fig. 1.

The common supply line 37 depicted on the left-hand side in Fig. 1 comprises the liquid fuel supply 9 and the preheater 12 upstream of a junction. At the junction the said common supply line 37 splits into two sections leading to the prechamber intake manifold 8 and to the combustion chamber intake manifold 7.

As shown in Fig. 1, the section leading to the combustion chamber intake manifold 7 can split once again into several subsections leading to the combustion chamber intake manifold 7, preferably to the combustion chamber intake pipes 22.

The preheater 12 can heat the liquid fuel prior to its evaporation, preferably prior to mixing air with the preheated liquid fuel and prior to injecting the preheated liquid fuel into the at least one air-fuel-mixing-zone 10.

The benefit of the preheater 12 is that the liquid fuel can be preheated to a desired temperature level before the preheated liquid fuel is dosed to a liquid fuel injector 24 or provided to the port fuel injectors 21. The preheated liquid fuel is preferably preheated to such a temperature level that the injection by the liquid fuel injector 24 or the port fuel injectors 21 forces the liquid fuel to evaporate in a sudden and/or complete manner. The suddenly and/or completely evaporated fuel can be simultaneously and/or subsequently mixed with the compressed air from the compressor 6 within the air-fuel-mixing-zone 10.

Due to the preheater 12, the thermal energy and temperature, respectively, of the liquid fuel and/or the injection conditions the liquid fuel can evaporate at least partially, preferably completely, and can mix with the air to form an air-fuel-mixture.

In a preferred embodiment, the preheated liquid fuel evaporates suddenly and/or completely during and/or after injection.

So, by the preheater 12 the evaporation is promoted and subsequent condensation hindered.

According to a preferred embodiment of the internal combustion engine 1, it is provided that the at least one preheater 12 is configured to preheat the liquid fuel
- prior to mixing air with the preheated liquid fuel and/or
- prior to injecting the preheated liquid fuel into the at least one air-fuel-mixing-zone 10 and/or
- prior to injecting the preheated liquid fuel into the combustion chamber intake manifold 7 and/or
- prior to injecting the preheated liquid fuel into the prechamber intake manifold 8.

According to a preferred embodiment of the internal combustion engine 1, it is provided that the at least one preheater 12 is located upstream of at least one component selected from the group consisting of the at least one air-fuel-mixing-zone 10, an injector, preferably a port fuel injector 21 and/or a liquid fuel injector 24, and a junction leading to at least one combustion chamber intake manifold 7 and to at least one prechamber intake manifold 8.

In a preferred embodiment, the internal combustion engine 4 comprises a single-point injection system, preferably for injecting a liquid fuel into the combustion chamber intake manifold 7 or the prechamber intake manifold 8 via a liquid fuel injector 24, and/or a multi-point injection system, preferably for injecting a liquid fuel into the combustion chamber intake manifold 7 via at least two port fuel injectors 21,

The advantageous effect of the preheater 12 can be achieved as well and/or further promoted by the heating device 11 and/or the intercooler 25 which is configured to cool and heat.

According to a preferred embodiment of the internal combustion engine 1, it is provided that the at least one preheater 12 and/or the at least one heating device 11 and/or the at least one intercooler is located adjacent, preferably directly adjacent, to at least one component selected from the group consisting of the at least one air-fuel-mixing-zone 10, an injector, preferably a port fuel injector 21 and/or a liquid fuel injector 24, and a dosing device 13.

In this application the term 'adjacent' stands for 'next to'. E.g. an air-fuel-mixer 36 in Fig. 1 is adjacent to the measuring device 15 and the controlling device 14. E.g. a first and bigger preheater in Fig. 3 is adjacent to the dosing device 13 and to a second and smaller preheater 12.

In this application the term 'directly adjacent' stands for 'next to without any component in between' . E.g. the liquid fuel injector 24 in Fig. 1 is directly adjacent to the air-fuel-mixer 36. E.g. the second and smaller preheater 12 in Fig. 2 is adjacent to the first and bigger preheater 12 and directly adjacent to the air-fuel-mixing-zone 10.

According to a preferred embodiment of the internal combustion engine 1, it is provided that at least one component selected from the group consisting of the at least one preheater 12, the at least one heating device 11 and the at least one intercooler is
- part of the combustion chamber intake manifold 7 and/or
- part of the prechamber intake manifold 8 and/or
- part of a common supply line 37.

According to a preferred embodiment of the internal combustion engine 1, it is provided that the at least one air-fuel-mixing-zone 10 is integrated in or connected to at least one component selected from the group consisting of the combustion chamber intake manifold 7, the prechamber intake manifold 8, the common supply line 37 and an air-fuel-mixer 36.

According to a preferred embodiment of the internal combustion engine 1, it is provided that the at least one air-fuel-mixing-zone 10 comprises or is connected to a liquid fuel injector 24 and/or a port fuel injector 21 configured to inject the liquid fuel into the at least one air-fuel-mixing-zone 10.

According to a preferred embodiment of the internal combustion engine 1, it is provided that the at least one air-fuel-mixing-zone 10 is configured to evaporate the liquid fuel and/or the air-fuel-mixture at least partially, preferably completely, and/or stabilize the liquid fuel and/or the air-fuel-mixture at least partially, preferably completely, in the gas state.

According to a preferred embodiment of the internal combustion engine 1, it is provided that the at least one preheater 12 and/or the at least one air-fuel-mixing-zone 10 is configured to maintain a pressure of 10 bar to 30 bar, and/or a temperature of at least 60 °C, preferably of 100 °C to 200 °C, preferably 125 °C to 180 °C, within the at least one preheater 12 and/or the at least one air-fuel-mixing-zone 10.

In Fig. 1 the air-fuel-mixing-zone 10 in the prechamber intake manifold 8 may be configured to maintain a pressure of 10 bar to 30 bar, and/or a temperature of at least 60 °C, preferably of 100 °C to 200 °C, preferably 125 °C to 180 °C, within the air-fuel-mixing-zones 10.

According to a preferred embodiment of the internal combustion engine 1, it is provided that the at least one air-fuel-mixing-zone 10 and/or the at least one intercooler is configured to maintain a pressure of 4 bar to 6 bar, preferably 5 bar to 6 bar, and/or a temperature of 30 °C to 60 °C, preferably of 50 °C to 60 °C, within the at least one air-fuel-mixing-zone 10 and/or the at least one intercooler.

In Fig. 1 the air-fuel-mixing-zone 10 in the prechamber intake manifold 8 and the air-fuel-mixing-zones 10 in the combustion chamber intake pipes 22 may be configured to maintain a pressure of 4 bar to 6 bar, preferably 5 bar to 6 bar, and/or a temperature of 30 °C to 60 °C, preferably of 50 °C to 60 °C, within the at least one air-fuel-mixing-zone 10 and/or the at least one intercooler.

So, the air-fuel-mixing-zone 10 in the prechamber intake manifold 8 in Fig. 1 may be configured to maintain different ranges of pressure and/or temperature. This can be realized by an air-fuel-mixing-mixer 36 with an integrated liquid fuel injector 24 maintaining higher pressures and/or temperatures and a air-fuel-mixing zone 10 maintaining lower pressures and/or temperatures.

In Fig. 1 one of the air-fuel-mixing-zones 10 is an air-fuel-mixer 36, a separate device located between the measuring device 15 and controlling device 14 in the prechamber intake manifold 8.

In a preferred embodiment, the injector, preferably the liquid fuel injector 24, and/or the dosing device 13, is located upstream of the air-fuel-mixing-zone 10.

The heating device 11 in Fig. 1 is located directly adjacent to the air-fuel-mixer 36 and can be configured to heat the air-fuel-mixture in such a way that the fuel within the air-fuel-mixture is partially or preferably completely evaporated. Moreover, the thermal energy and temperature of the air-fuel-mixture can be increased by the heating device 11 in such a way that subsequent condensation of the air-fuel-mixture is hindered until its arrival at the combustion chamber 2 and/or the prechamber 3.

According to a preferred embodiment of the internal combustion engine 1, it is provided that the at least one heating device 11 is integrated in or as a separate device thermally coupled to the at least one air-fuel-mixing-zone 10 and wherein the at least one heating device 11 is configured to heat the air-fuel-mixture during and/or after mixing of air and liquid fuel.

In this application the term 'X is integrated in or connected to Y' means that either component X is an integrated part of the device Y or that X in the form of a separate device is connected to another separate device Y. E.g. the liquid fuel injector 24 and the heating device 11 in Fig. 1 are separate devices connected to the air-fuel-mixing-zone 10. In an analogue manner, a second and smaller preheater in Fig. 3 is connected to the air-fuel-mixing-zone 10. In contrast to Fig. 1, in Fig. 3 the liquid fuel injector 24 as well as the heating device 11 are each an integrated part of the air-fuel-mixing-zone 10. In Fig. 3, the second and smaller preheater 12 is in the form of a separate device connected to the air-fuel-mixing-zone 10.

The intercooler 25 in Fig. 1 is located between the compressor 6 and one of the flame arrestors 29 and can be configured to cool in a known manner and additionally to heat air and/or an air-fuel-mixture like in Fig. 1 to 3. So, the thermal energy and temperature, respectively, of the air-fuel-mixture can be kept within a desired temperature range. The intercooler 25 can heat the air-fuel-mixture in such a way that the fuel within the air-fuel-mixture is partially or preferably completely evaporated. Moreover, the thermal energy and temperature, respectively, of the air-fuel-mixture can be increased by the intercooler 25 in such a way that subsequent condensation of the air-fuel-mixture is hindered until its arrival at the combustion chamber 2 and/or the prechamber 3.

In a preferred embodiment the air-fuel-mixer 36 comprises a liquid fuel injector configured to inject the liquid fuel into the air-fuel-mixer 36.

In another preferred embodiment the air-fuel-mixer 36 comprises a liquid fuel injector configured to inject the liquid fuel into the air-fuel-mixer in a spraying manner.

Hence, the liquid fuel within the air-fuel-mixer 36 can be better distributed which supports the evaporation.

The air-fuel-mixer 36 in Fig. 1 is a separate device configured to provide an air-fuel-mixture, preferably with at least partially or completely evaporated fuel, wherein this air-fuel-mixture comprises at least the originally liquid fuel from the liquid fuel supply 9 and air from the air supply 5. This air-fuel-mixture may alternatively or additionally comprise the originally liquid fuel from the liquid fuel supply 9 and another air-fuel-mixture from the gas mixer 27.

In a preferred embodiment the intake system comprises a gas fuel supply 26 and a gas mixer 27 mixing air with a gas fuel from the gas fuel supply 26, preferably wherein the gas mixer 27 is located upstream of the compressor 6 and/or the gas fuel is individually or in combination selected from the group consisting of: natural gas, firedamp, biogas, hydrocarbons, preferably methane, molecular hydrogen.

An additional fuel in form of a gas fuel can be included to increase the performance, operation stability and/or the sufficient combustion of the air-fuel-mixture.

In a preferred embodiment
- the gas mixer 27 is configured to provide a first air-fuel-mixture, preferably solely, to the air-fuel-mixer and
- the air-fuel-mixing-zone 10 is configured to provide, preferably simultaneously, a second air-fuel-mixture to the at least one combustion chamber 2 and optionally to the at least one prechamber 3, wherein the second air-fuel-mixture is a mixture of the first air-fuel-mixture from the gas mixer 27 and the liquid fuel from the liquid fuel supply 9.

As depicted in Fig. 1 the air-fuel-mixer 36 can comprise or be connected to a liquid fuel injector 24 configured to inject the liquid fuel into the air-fuel-mixing-zone 10 and/or a heating device 11 for heating the air-fuel-mixture.

In a preferred embodiment the internal combustion engine comprises a, preferably single point, high pressure fuel dosing device for injecting the liquid fuel at a high pressure.

With the dosing device 13 the amount of liquid fuel provided to the air-fuel-mixing zone 10 can be adjusted. Depending on the dosing device 13, the mode of operation, e.g. continuous or pulsed operation, and/or the air-fuel-ratio, also called lambda, can be controlled.

The controlling device 14 can be used to control the amount of air-fuel-mixture provided by the air-fuel-mixing-zone 10 and directed to the at least one combustion chamber 2 and optionally the at least one prechamber 3.

The measuring device 15 can provide information concerning the compressed air from the compressor 6 like the fluid flow, the pressure, the temperature and/or other parameters which are important for providing the desired air-fuel-mixture by the air-fuel-mixing-zone 10.

In a preferred embodiment of the internal combustion engine the at least one combustion chamber 2 and/or the at least one prechamber 3 comprises a, preferably active or passive, gas valve 20.

Especially a passive prechamber gas valve is advantageous due to the reduced control effort and controlling equipment.

It is beneficial that proven passive prechamber valves and sparkplug socket assemblies from gas scavenged or mixture scavenged prechamber systems can be used for the internal combustion engine.

In a preferred embodiment of the internal combustion engine the at least one combustion chamber 2 and/or the at least one prechamber 3 comprises a detecting device 16, preferably a pressure sensor.

In a preferred embodiment of the internal combustion engine a control unit 19 is provided to control at least one of the following components or properties:
- The gas fuel supply 26 and the gas-fuel-mixer 26,
- The gas mixer 27,
- The compressor 6 for controlling a fluid flow of the compressed air,
- The preheater 12 for preheating the liquid fuel from the liquid fuel supply 9,
- The heating device 11 for heating the air and/or the air-fuel-mixture,
- The intercooler 25 for cooling and/or heating the temperature of the compressed air and/or the air-fuel-mixture,
- The liquid fuel supply 9,
- The compressor bypass valve 28,
- The throttle 30 for controlling a fluid flow of an air-fuel-mixture provided to the combustion chambers 2,
- The at least one port fuel injector 21 for controlling the amount and/or conditions of a fluid flow of the liquid fuel injected into the combustion chamber intake manifold 7 and/or the combustion chamber intake pipes 22,
- The measuring device 15, preferably for measuring a mass flow,
- The at least one air-fuel-mixing-zone 10,
- the liquid fuel injector 24 for controlling the amount and/or conditions of a fluid flow of the liquid fuel injected into the prechamber intake manifold 8,
- The controlling device 14 for controlling the amount of a fluid flow of the air-fuel-mixture from the air-fuel-mixing-zone,
- gas valve 20 for the prechamber 3,
- detecting device 16, preferably for detecting a pressure within at least one of the combustion chambers 2,
- the turbine 18 and the driving of the compressor 6 by the turbine 18,
- the exhaust bypass valve 35.

In a preferred embodiment, it is provided that the at least one preheater 12 and/or the at least one heating device 11 and/or the at least one intercooler can be an electric heating device or with other word a heating device by electricity.

In a preferred embodiment, it is provided that the at least one preheater 12 and/or the at least one heating device 11 and/or the at least one intercooler can be an active or a passive device.

According to a preferred embodiment of the internal combustion engine 1, it is provided that the internal combustion engine 1 comprises a control unit 19 to control at least one property selected from the group consisting of:
- the air-fuel-ratio of the air-fuel-mixture, preferably by means of the dosing device 13 and/or the compressor 6,
- the amount of the air-fuel-mixture provided to the at least one prechamber 3, preferably by means of the controlling device 14,
- the temperature within the at least one preheater 12 and/or the at least one air-fuel-mixing-zone 10 and/or the at least one intercooler and
- the pressure within the at least one preheater 12 and/or the at least one air-fuel-mixing-zone 10 and/or the at least one intercooler.

The exhaust system 17 of Fig. 1 comprises following components:
- A turbine 18, connected to the compressor 6 by the turbine drive shaft 33 to drive the compressor 6,
- An exhaust exit 32 for exhaust gas,
- An exhaust bypass 34 with an exhaust bypass valve 35. The exhaust bypass 34 connects the combustion chambers 2 with the exhaust exit 32 and bypasses the turbine 18.

According to a preferred embodiment of the internal combustion engine 1, it is provided that the internal combustion engine comprises at least one component selected from the group consisting of
- a compressor 6 compressing air and feeding the compressed air downstream into the at least one combustion chamber 2 by the combustion chamber intake manifold 7 and/or into the at least one prechamber 3 by the prechamber intake manifold 8,
- a dosing device 13, preferably a dosing valve or orifice, between the liquid fuel supply 9 and the at least one air-fuel-mixing-zone 10 for, preferably continuous or pulsed, dosing of the liquid fuel into the at least one air-fuel-mixing-zone 10,
- a controlling device 14, preferably a controlling valve or orifice, downstream of the at least one air-fuel-mixing-zone 10,
- a measuring device 15, preferably a mass flow sensor, upstream of the at least one air-fuel-mixing-zone 10, preferably in the prechamber intake manifold 8,
- a detecting device 16, preferably a pressure sensor, within the at least one combustion chamber 2 and/or the at least one prechamber 3 and
- an exhaust system 17, wherein the exhaust system 17 comprises a turbine 18, preferably wherein the turbine 18 is configured to drive the compressor 6.

The working principle of the internal combustion engine shown in Fig. 1 can be exemplarily described as follows:
The air necessary for combustion is provided by the air supply 5. The simplest embodiment of an air supply 5 is a simple pipe for intaking surrounding air.

In a preferred embodiment the air supply comprises a filter and/or a dryer.

The air may be compressed by the compressor 6. Due to this compression the thermal energy of the air may increase.

Next, the air is fed into the combustion chamber intake manifold 7 and into the prechamber intake manifold 8 as well. In the combustion chamber intake manifold 7 the air is passing the intercooler 25, the flame arrestor 29 and the throttle 30. The fluid flow of the air is divided into the combustion chamber intake pipes 22.

Within the combustion chamber intake pipes 22 the port fuel injectors 21 add a determined amount of the liquid fuel provided by the liquid fuel supply 9 to the air. In each of the combustion chamber intake pipes 22 is an air-fuel-mixing-zone 10 where each of the port fuel injectors 21 inject the liquid fuel and thus mix the fuel with the air.

Due to the thermal energy of the air and the preheated liquid fuel and the injection conditions the liquid fuel evaporates at least partially, preferably completely, in the air-fuel-mixing-zones 10 and mixes with the air to form an air-fuel-mixture. This air-fuel-mixture is fed to the individual combustion chambers 2.

Besides that, the compressed air from the compressor is also fed into the prechamber intake manifold 8 and passes the measuring device 15 until the air reaches the air-fuel-mixing-zone 10 in the prechamber intake manifold 8. The said air-fuel-mixing-zone 10 is connected to the liquid fuel supply 9. Hence, preheated liquid fuel and the compressed air can be mixed by the air-fuel-mixing-zone 10. Due to the thermal energy of the air and the preheated liquid fuel and the injection conditions the liquid fuel evaporates at least partially, preferably completely, and mixes with the air to form an air-fuel-mixture. This air-fuel-mixture is fed to the individual prechambers 3 by leaving the said air-fuel-mixing-zone 10 and flowing along the remaining prechamber intake manifold 8. Shortly before the individual prechambers 3 the prechamber intake manifold 8 divides in six prechamber intake pipes 31.

The benefit of the preheater is that the thermal energy and the temperature, respectively, of the liquid fuel is increased by preheater without evaporating it yet. When the preheated liquid fuel arrives in at least one of the air-fuel-mixing-zones 10 the liquid fuel can suddenly and/or partially, preferably completely, evaporate. The mixing procedure of the originally liquid fuel with air can promote an at least partially and preferably complete evaporation of all fuel within the air-fuel-mixture as well.

The benefit of a heating device 11 and/or an intercooler 25 which is configured to cool as well as to heat like in Fig. 1 is that the thermal energy and the temperature, respectively, of the air-fuel-mixture is increased. Liquid fuel which is still present in the air-fuel-mixture can be at least partially and preferably completely evaporated. The mixing procedure of the originally liquid fuel with air can promote an at least partially and preferably complete evaporation of all fuel within the air-fuel-mixture as well.

In the embodiment of Fig. 1 the compressed air is provided by the compressor 6. Hence, the compressed air can be hot and can be, at least partially, directed into at least one of the air-fuel-mixing-zones 10 of the intake system 4 in Fig. 1. The benefit of this embodiment is that the thermal energy generated by the compressor 6 can be used to evaporate the air-fuel-mixture at least partially, preferably completely and/or stabilize the air-fuel-mixture at least partially, preferably completely, in the gas state.

The benefit of the air-fuel-mixing-zone 10 in the prechamber intake manifold 8 is that the liquid fuel can be sufficiently evaporated for the prechamber combustion. This is very important since the prechamber combustion serves as an ignition amplifier and supports the combustion of the combustion chamber. On the other hand, condensation issues in the prechamber intake manifold 8 and/or the prechamber 3, especially with liquid fuels like alcohols and others, disturb a stable combustion and can be avoided by preheated liquid fuel and/or heated air-fuel-mixture.

The above-mentioned working principle is an example only and is not considered to limit the scope of the invention. Another working principle may include besides air from the air supply 5 a gas fuel from the gas fuel supply 27 which is mixed with the air from the air supply 5 before this air-fuel-mixture is compressed and heated by the compressor 6.

According to a preferred embodiment of the internal combustion engine 1, it is provided that:
- the liquid fuel is partially, preferably completely, in the liquid state at 1.013 bar and at 0 °C and/or
- an evaporation enthalpy of the liquid fuel is at least 600 kJ/kg, preferably at least 800 kJ/kg, more preferably at least 1.000 kJ/kg, and/or
- the liquid fuel is a pure substance or a mixture and/or
- the air-fuel-mixture is at least partially, preferably completely, in the gas state at 4 bar to 6 bar, preferably 5 bar to 6 bar, and at 30 °C to 60 °C, preferably 50 °C to 60 °C, and/or
- the volume fraction of the fuel in the air-fuel-mixture is between 10% v/v and 50% v/v, preferably between 20% v/v and 50% v/v.

Data concerning the evaporation enthalpy is described below and cited from "Thermodynamik der Verbrennungskraftmaschine" from Rudolf Pischinger, Manfred Kell and Theodor Sams, 3. Edition, published 2009 by Springer Wien-New York, page 433 (https://doi.org/10.1007/978-3-211-99277-7). The boiling points and evaporation enthalpies among other thermodynamical properties of different liquid fuels are stated in the following table, wherein the evaporation enthalpies relate to 1.013 bar and are described as "Verdampfungswärme [kJ/kg]".

| | Euro Super | Diesel | Schweröl | Methanol | Ethanol | RME |
|---|---|---|---|---|---|---|
| ... | ... | ... | ... | ... | ... | ... |
| Siedetemp. [°C] | 30-190 | 170-350 | 175-450 | 65 | 78 | |
| Verdampfungswärme [kJ/kg] | 420 | 300 | | 1110 | 845 | |
| ... | ... | ... | ... | ... | ... | ... |

Liquid fuels with an evaporation enthalpy of at least 600 kJ/kg, preferably at least 800 kJ/kg, more preferably at least 1.000 kJ/kg, are for example methanol or ethanol. Methanol shows an evaporation enthalpy, which is the "Verdampfungswärme [kJ/kg]" in above table, of 1.100 kJ/kg, whereas ethanol shows an evaporation enthalpy of 845 kJ/kg.

Gasoline, which is "Euro Super" in above table, or diesel, which is "Diesel" in above table, are liquid fuels consisting of different hydrocarbons. According to above table gasoline/Euro Super shows an evaporation enthalpy of 420 kJ/kg and diesel/Diesel shows an evaporation enthalpy of 300 kJ/kg. So, liquid fuels with an evaporation enthalpy of at least 600 kJ/kg, preferably at least 800 kJ/kg, more preferably at least 1.000 kJ/kg, do not include gasoline or diesel.

So, in this document a liquid fuel with an evaporation enthalpy of at least 600 kJ/kg, preferably at least 800 kJ/kg, more preferably at least 1.000 kJ/kg, shall be understood as liquid fuel
- which is a pure substance wherein the pure substance shows an evaporation enthalpy of at least 600 kJ/kg, preferably at least 800 kJ/kg, more preferably at least 1.000 kJ/kg, at its respective boiling point and at 1,013 bar or
- which is a mixture of at least two ingredients wherein the mixture as whole shows an evaporation enthalpy of at least 600 kJ/kg, preferably at least 800 kJ/kg, more preferably at least 1.000 kJ/kg, at its respective boiling point and at 1,013 bar and/or
- which is a mixture of at least two ingredients wherein all ingredients separately show an evaporation enthalpy of at least 600 kJ/kg, preferably at least 800 kJ/kg, more preferably at least 1.000 kJ/kg, at their respective boiling points and at 1,013 bar.

A pure substance comprises only one chemical molecule like pure methanol or pure ethanol whereas a mixture comprises at least two chemical molecules or with other words two ingredients. The liquid fuel in form of a mixture may be for example a mixture of different alcohols like methanol and ethanol.

According to a preferred embodiment of the internal combustion engine 1, it is provided that the liquid fuel is individually or in combination selected from the group consisting of: alcohols, preferably methanol and/or ethanol, hydrocarbons, ammonia and ammoniac solutions.

For example, the liquid fuel can be pure methanol or a mixture of methanol with another liquid fuel like ethanol.

Liquid fuels like methanol are preferred since fossil fuels are disadvantageous due to economic and ecological reasons. For example, methanol on the other hand can be produced by green technologies like wind, solar or hydropower by conversion of CO₂ and H₂. Hence, methanol can be a green energy carrier. In contrast to other potential green energy carriers like hydrogen, methanol combines the advantages of green energy and the easy handling of liquid fuels. Therefore, the usage of liquid fuels like methanol is meeting the current requirements of sustainable energy carriers which can be simply handled, transported and stored.

The components described in Fig. 1 may vary in their amount and/or position within the internal combustion engine.

Fig. 2 shows a second example of an embodiment of a proposed internal combustion engine 1.

The embodiment of Fig. 2 is similar to the embodiment of Fig. 1 although there are some differences which are explained in the following. Despite that, all that has been said so far can apply in an analog manner if appropriately.

The combustion chamber intake manifold 7 depicted in Fig. 2 is essentially the same as the combustion chamber intake manifold 7 depicted in Fig. 1. The major difference between these two embodiments is that there is only one air-fuel-mixing-zone 10 left. This said air-fuel-mixing-zone 10 in Fig. 2 is located in the combustion chamber intake manifold 7 and not in the prechamber intake manifold 8 like in Fig. 1. This said air-fuel-mixing-zone 10 in Fig. 2 is a separate device in the form of an air-fuel-mixer 36.

The working principle of the internal combustion engine shown in Fig. 2 can be exemplarily described as follows:
The air necessary for combustion is provided by the air supply 5. The air may be compressed by the compressor 6. Due to this compression the thermal energy of the air can be increased.

Next, the compressed and preferably hot air is fed into the combustion chamber intake manifold 7 and shortly before the combustion chambers 2 into the prechamber intake manifolds 8 as well.

In the combustion chamber intake manifold 7 the compressed and preferably hot air provided by the compressor 6 is fed into the air-fuel-mixing-zone 10.

The air-fuel-mixing-zone 10 is connected to the liquid fuel supply 9. Hence, liquid fuel and the compressed and hot air can be mixed by the air-fuel-mixing-zone 10.

In Fig. 2, there is a preheater 12 provided upstream of the air-fuel-mixing zone 10, to be more precise between the liquid fuel supply 9 and the air-fuel-mixing-zone 10. Additionally, in Fig. 2 there are a liquid fuel injector 24 and a dosing device 13 provided.

Due to the thermal energy of the preheated liquid fuel and the injection conditions the liquid fuel evaporates at least partially, preferably completely, in the air-fuel-mixing-zone 10 and mixes with the air to form an air-fuel-mixture. This air-fuel-mixture is further directed downstream along the combustion chamber intake manifold 7 and passes the intercooler 25, the flame arrestor 29 and the throttle 30.

The benefit of the preheater is that the increased thermal energy and temperature, respectively, of the preheated liquid fuel promotes a subsequent evaporation since less thermal energy is necessary for a partial or preferably complete evaporation of the liquid fuel as a pure substance and/or as a part of the air-fuel-mixture.

This advantageous effect can be achieved as well and/or further promoted by the heating device 11 and/or the intercooler 25 which is configured to cool and heat.

The fluid flow of the air-fuel-mixture is divided into the combustion chamber intake pipes 22. Within the combustion chamber intake pipes 22 the fluid flow of the air-fuel-mixture is divided once again into the remaining segment of the individual combustion chamber intake pipe 22 and an individual prechamber intake pipe 31. In the embodiment of Fig. 2 the prechamber intake manifold 8 consists solely of six separated and individual prechamber intake pipes 31. Hence, the air-fuel-mixture provided to the combustion chambers 2 and the prechambers 3 is basically the same. In contrast, the air-fuel-mixtures described in view of the embodiment depicted in Fig. 1 are provided independently from each other by the air-fuel-mixing-zones 10 and the port fuel injectors 21 and the liquid fuel injector 24. Both embodiments offer advantages due to the uniform air-fuel-mixture or the different air-fuel-mixtures.

According to a preferred embodiment of the internal combustion engine 1, it is provided that a mixing device to provide a uniformly distributed air-fuel-mixture to the at least one combustion chamber 2 and/or to the at least one prechamber 3 is integrated in or connected to at least one component selected from the group consisting of the at least one air-fuel-mixing-zone 10, the combustion chamber intake manifold 7 and the prechamber intake manifold 8.

The above-mentioned working principle is an example only and is not considered to limit the scope of the invention. Another working principle may include besides the air from the air supply 5 a gas fuel from the gas fuel supply 27 which is mixed with the air from the air supply 5 before this air-fuel-mixture is compressed and heated by the compressor 6.

Fig. 2 shows an internal combustion engine 1 with at least one compressor 6 compressing air and feeding the compressed air downstream into the at least one combustion chamber 2 and optionally into the at least one prechamber 3, wherein the air-fuel-mixing-zone 10 is located downstream of the compressor 6 in the intake system 4.

In a preferred embodiment the air-fuel-mixing-zone 10 is adjacent, preferably directly adjacent, to the compressor 6 in the intake system 4.

Due to the downstream and adjacent position of the air-fuel-mixer in relation to the compressor the heat of the compressed air can be ideally used, and the evaporation of the liquid fuel can be promoted and a subsequent condensation hindered.

The embodiment examples of Fig. 1 and Fig. 2 may be combined, e.g. the measuring device 15 and the controlling device 14 may be integrated in the combustion chamber intake manifold 7 of the embodiment in Fig. 2.

The described components of the embodiment of Fig. 2 may vary in their amount and/or position within the internal combustion engine. For example, Fig. 3 shows a different arrangement with changed amounts and/or positions of individual components.

Fig. 3 shows a third example of an embodiment of a proposed internal combustion engine.

The embodiment of Fig. 3 is similar to the embodiment of Fig. 2, so the differences will be described in the following.

The arrangement between the liquid fuel supply 9 to the air-fuel-mixing-zone 10 and the air-fuel-mixing-zone 10 itself differ in Fig. 3 in contrast to Fig. 2.

In Fig. 3 the preheater 12, to be more precise a first preheater 12, is located between the dosing device 13 and the air-fuel-mixing-zone 10. Additionally, a second preheater 12, smaller than the first preheater 12, is provided which is located between the first preheater 12 and the air-fuel-mixing-zone 10.

The first preheater 12 is in Fig. 3 adjacent to the dosing device 13 and the second preheater 12.

The second preheater 12 is in Fig. 3 a separate device and directly adjacent to the air-fuel-mixing-zone 10.

The air-fuel-mixing-zone 10 can be a separate device in the form of an air-fuel-mixer 36.

The air-fuel-mixer 36 in Fig. 3 differs from the air-fuel-mixer 36 in Fig. 2 since the liquid fuel injector 24 and the heating device 11 are integrated parts of the air-fuel-mixer 36. This is shown in Fig. 3 with the liquid fuel injector 24 and the heating device 11 being inside rather than alongside the air-fuel-mixer 36.

In contrast to Fig. 3, in Fig. 2 the liquid fuel injector 24 and the heating device 11 are separate devices and directly adjacent to the air-fuel-mixer 36.

While the invention has been described with a certain degree of particularity, it is to be noted that many modifications may be made in the details of the described construction and the arrangement of its components without departing from the spirit and scope of this disclosure. It is understood that the internal combustion engine is not limited to the embodiments set forth herein for purposes of exemplification.

All of the exemplary embodiments described can, if technically possible, be combined with one another and/or supplemented by individual features of other exemplary embodiments.

### Reference characters:

| | | | |
|---|---|---|---|
| 1 | internal combustion engine | 19 | control unit |
| | | 20 | gas valve |
| 2 | combustion chamber | 21 | port fuel injector |
| 3 | prechamber | 22 | combustion chamber intake pipe |
| 4 | intake system | | |
| 5 | air supply | 23 | intake bypass |
| 6 | compressor | 24 | liquid fuel injector |
| 7 | combustion chamber intake manifold | 25 | intercooler |
| | | 26 | gas fuel supply |
| 8 | prechamber intake manifold | 27 | gas mixer |
| | | 28 | compressor bypass valve |
| 9 | liquid fuel supply | 29 | flame arrestor |
| 10 | air-fuel-mixing-zone | 30 | throttle |
| 11 | heating device | 31 | prechamber intake pipe |
| 12 | preheater | 32 | exhaust gas exit |
| 13 | dosing device | 33 | turbine drive shaft |
| 14 | controlling device | 34 | exhaust bypass |
| 15 | measuring device | 35 | exhaust bypass valve |
| 16 | detecting device | 36 | air-fuel-mixer |
| 17 | exhaust system | 37 | common supply line |
| 18 | turbine | | |

## Claims

1. Internal combustion engine (1) with at least one combustion chamber, an intake system (4) and optionally at least one prechamber for the at least one combustion chamber, wherein the intake system (4) comprises:
- a liquid fuel supply (9) configured to provide a liquid fuel,
- at least one air-fuel-mixing-zone (10) configured to mix air with liquid fuel from the liquid fuel supply (9) and to provide an air-fuel-mixture,
- a combustion chamber intake manifold (7) leading into the at least one combustion chamber,
- optionally a prechamber intake manifold (8) leading into the at least one prechamber and
wherein there is provided at least one preheater (12) configured to preheat the liquid fuel prior to its evaporation.

2. Internal combustion engine (1) according to claim 1, wherein the at least one preheater (12) is configured to preheat the liquid fuel
- prior to mixing air with the preheated liquid fuel and/or
- prior to injecting the preheated liquid fuel into the at least one air-fuel-mixing-zone (10) and/or
- prior to injecting the preheated liquid fuel into the combustion chamber intake manifold (7) and/or
- prior to injecting the preheated liquid fuel into the prechamber intake manifold (8).

3. Internal combustion engine (1) according to claim 1 or 2, wherein the at least one preheater (12) is located upstream of at least one component selected from the group consisting of the at least one air-fuel-mixing-zone (10), an injector, preferably a port fuel injector (21) and/or a liquid fuel injector (24), and a junction leading to at least one combustion chamber intake manifold (7) and to at least one prechamber intake manifold (8).

4. Internal combustion engine (1), preferably according to any of the preceding claims, with at least one combustion chamber, an intake system (4) and optionally at least one prechamber for the at least one combustion chamber, wherein the intake system (4) comprises:
- a liquid fuel supply (9) configured to provide a liquid fuel,
- at least one air-fuel-mixing-zone (10) configured to mix air with liquid fuel from the liquid fuel supply (9) and to provide an air-fuel-mixture,
- a combustion chamber intake manifold (7) leading into the at least one combustion chamber,
- optionally a prechamber intake manifold (8) leading into the at least one prechamber and
wherein the at least one air-fuel-mixing-zone (10) comprises or is thermally coupled to at least one heating device (11) for heating the air-fuel-mixture.

5. Internal combustion engine (1) according to the previous claim, wherein the at least one heating device (11) is integrated in or as a separate device thermally coupled to the at least one air-fuel-mixing-zone (10) and wherein the at least one heating device (11) is configured to heat the air-fuel-mixture during and/or after mixing of air and liquid fuel.

6. Internal combustion engine (1), preferably according to any of the preceding claims, with at least one combustion chamber, an intake system (4) and optionally at least one prechamber for the at least one combustion chamber, wherein the intake system (4) comprises:
- a liquid fuel supply (9) configured to provide a liquid fuel,
- at least one air-fuel-mixing-zone (10) configured to mix air with liquid fuel from the liquid fuel supply (9) and to provide an air-fuel-mixture,
- a combustion chamber intake manifold (7) leading into the at least one combustion chamber,
- optionally a prechamber intake manifold (8) leading into the at least one prechamber and
wherein there is provided at least one intercooler configured to cool and to heat air and/or the air-fuel-mixture.

7. Internal combustion engine (1) according to any of the preceding claims, wherein the at least one preheater (12) and/or the at least one heating device (11) and/or the at least one intercooler is located adjacent, preferably directly adjacent, to at least one component selected from the group consisting of the at least one air-fuel-mixing-zone (10), an injector, preferably a port fuel injector (21) and/or a liquid fuel injector (24), and a dosing device (13).

8. Internal combustion engine (1) according to any of the preceding claims, wherein at least one component selected from the group consisting of the at least one preheater (12), the at least one heating device (11) and the at least one intercooler is
- part of the combustion chamber intake manifold (7) and/or
- part of the prechamber intake manifold (8) and/or
- part of a common supply line (37).

9. Internal combustion engine (1) according to any of the preceding claims, wherein the at least one air-fuel-mixing-zone (10) is integrated in or connected to at least one component selected from the group consisting of the combustion chamber intake manifold (7), the prechamber intake manifold (8), the common supply line (37) and an air-fuel-mixer (36).

10. Internal combustion engine (1) according to any of the preceding claims, wherein the at least one air-fuel-mixing-zone (10) comprises or is connected to a liquid fuel injector (24) and/or a port fuel injector (21) configured to inject the liquid fuel into the at least one air-fuel-mixing-zone (10).

11. Internal combustion engine (1) according to any of the preceding claims, wherein the at least one air-fuel-mixing-zone (10) is configured to evaporate the liquid fuel and/or the air-fuel-mixture at least partially, preferably completely, and/or stabilize the liquid fuel and/or the air-fuel-mixture at least partially, preferably completely, in the gas state.

12. Internal combustion engine (1) according to any of the preceding claims, wherein the at least one preheater (12) and/or the at least one air-fuel-mixing-zone (10) is configured to maintain a pressure of 10 bar to 30 bar, and/or a temperature of at least 60 °C, preferably of 100 °C to 200 °C, preferably 125 °C to 180 °C, within the at least one preheater (12) and/or the at least one air-fuel-mixing-zone (10).

13. Internal combustion engine (1) according to any of the preceding claims, wherein the at least one air-fuel-mixing-zone (10) and/or the at least one intercooler is configured to maintain a pressure of 4 bar to 6 bar, preferably 5 bar to 6 bar, and/or a temperature of 30 °C to 60 °C, preferably of 50 °C to 60 °C, within the at least one air-fuel-mixing-zone (10) and/or the at least one intercooler.

14. Internal combustion engine (1) according to any of the preceding claims, wherein:
- the liquid fuel is partially, preferably completely, in the liquid state at 1.013 bar and at 0 °C and/or
- an evaporation enthalpy of the liquid fuel is at least 600 kJ/kg, preferably at least 800 kJ/kg, more preferably at least 1.000 kJ/kg, and/or
- the liquid fuel is a pure substance or a mixture and/or
- the air-fuel-mixture is at least partially, preferably completely, in the gas state at 4 bar to 6 bar, preferably 5 bar to 6 bar, and at 30 °C to 60 °C, preferably 50 °C to 60 °C, and/or
- the volume fraction of the fuel in the air-fuel-mixture is between 10% v/v and 50% v/v, preferably between 20% v/v and 50% v/v.

15. Internal combustion engine (1) according to any of the preceding claims, wherein the liquid fuel is individually or in combination selected from the group consisting of: alcohols, preferably methanol and/or ethanol, hydrocarbons, ammonia and ammoniac solutions.

16. Internal combustion engine (1) according to any of the preceding claims, wherein a mixing device to provide a uniformly distributed air-fuel-mixture to the at least one combustion chamber (2) and/or to the at least one prechamber (3) is integrated in or connected to at least one component selected from the group consisting of the at least one air-fuel-mixing-zone (10), the combustion chamber intake manifold (7) and the prechamber intake manifold (8).

17. Internal combustion engine (1) according to any of the preceding claims comprising at least one component selected from the group consisting of
- a compressor (6) compressing air and feeding the compressed air downstream into the at least one combustion chamber (2) by the combustion chamber intake manifold (7) and/or into the at least one prechamber (3) by the prechamber intake manifold (8),
- a dosing device (13), preferably a dosing valve or orifice, between the liquid fuel supply (9) and the at least one air-fuel-mixing-zone (10) for, preferably continuous or pulsed, dosing of the liquid fuel into the at least one air-fuel-mixing-zone (10),
- a controlling device (14), preferably a controlling valve or orifice, downstream of the at least one air-fuel-mixing-zone (10),
- a measuring device (15), preferably a mass flow sensor, upstream of the at least one air-fuel-mixing-zone (10), preferably in the prechamber intake manifold (8),
- a detecting device (16), preferably a pressure sensor, within the at least one combustion chamber (2) and/or the at least one prechamber (3) and
- an exhaust system (17), wherein the exhaust system (17) comprises a turbine (18), preferably wherein the turbine (18) is configured to drive the compressor (6).

18. Internal combustion engine (1) according to any of the preceding claims, preferably to the previous claim, wherein the internal combustion engine (1) comprises a control unit (19) to control at least one property selected from the group consisting of:
- the air-fuel-ratio of the air-fuel-mixture, preferably by means of the dosing device (13) and/or the compressor (6),
- the amount of the air-fuel-mixture provided to the at least one prechamber (3), preferably by means of the controlling device (14),
- the temperature within the at least one preheater (12) and/or the at least one air-fuel-mixing-zone (10) and/or the at least one intercooler and
- the pressure within the at least one preheater (12) and/or the at least one air-fuel-mixing-zone (10) and/or the at least one intercooler.
